(19) Europäisches Patentamt
European Patent Office
Office européen des brevets

(11) EP 2 108 671 A1

(12) EUROPEAN PATENT APPLICATION
published in accordance with Art. 153(4) EPC

(43) Date of publication:
**14.10.2009 Bulletin 2009/42**

(21) Application number: **08704387.3**

(22) Date of filing: **29.01.2008**

(51) Int Cl.:
***C08G 64/02*** *(2006.01)*

(86) International application number:
**PCT/JP2008/051708**

(87) International publication number:
**WO 2008/093860 (07.08.2008 Gazette 2008/32)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **02.02.2007 JP 2007024006**

(71) Applicant: **Teijin Limited**
**Osaka-shi, Osaka 541-0054 (JP)**

(72) Inventors:
- **MIYAKE, Toshiyuki**
  **Tokyo 100-0013 (JP)**
- **KINOSHITA, Masami**
  **Tokyo 100-0013 (JP)**
- **SAITO, Mizuho**
  **Tokyo 100-0013 (JP)**
- **KITAZONO, Eiichi**
  **Iwakuni-shi**
  **Yamaguchi 740-0014 (JP)**
- **ODA, Akimichi**
  **Iwakuni-shi**
  **Yamaguchi 740-0014 (JP)**

(74) Representative: **Albrecht, Thomas et al**
**Kraus & Weisert**
**Patent- und Rechtsanwälte**
**Thomas-Wimmer-Ring 15**
**80539 München (DE)**

# (54) POLYCARBONATE RESIN AND METHOD FOR PRODUCING THE SAME

(57) A polycarbonate resin which shows a high content of biogenic matter and has excellent heat resistance, heat stability and moldability and a manufacturing process thereof.

The polycarbonate resin contains a recurring unit represent by the following formula (1) as the major constituent, and has (i) a specific viscosity of a solution prepared by dissolving 0.7 g of the resin in 100 ml of methylene chloride at 20˚C of 0.20 to 0.45, (ii) a glass transition temperature (Tg) of 150 to 200˚C, and (iii) a 5 % weight loss temperature (Td) of 330 to 400˚C.

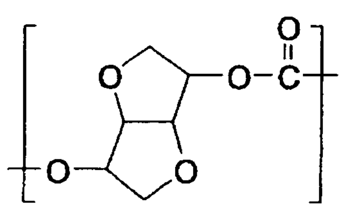

(1)



Printed by Jouve, 75001 PARIS (FR)

## Description

Technical Field

The present invention relates to a novel polycarbonate resin and a manufacturing process thereof. More specifically, it relates to a polycarbonate resin containing a unit which can be derived from a sugar as biogenic matter and having high heat resistance and heat stability and excellent moldability and to a manufacturing process thereof.

Background of the Art

Polycarbonate resins are polymers obtained by combining aromatic or aliphatic dioxy compounds by means of a carbonate. Out of these, a polycarbonate resin obtained from 2,2-bis(4-hydroxyphenyl)propane (commonly called "bisphenol A") (may be referred to as "PC-A" hereinafter) is used in many fields because it has high transparency and heat resistance and excellent mechanical properties such as impact resistance.

Polycarbonate resins are generally manufactured from raw materials obtained from oil resources. The depletion of oil resources is now apprehended, and the manufacture of a polycarbonate resin from a raw material obtained from biogenic matter such as plants is desired. A polycarbonate resin obtained from an ether diol raw material which can be manufactured from a sugar as a biomass material obtained from biogenic matter is now under study.

For example, an ether diol represented by the following formula (2) is easily formed from a sugar or starch.

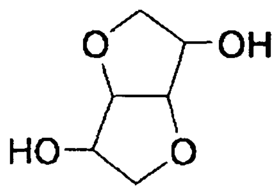

(2)

This ether diol has three known stereoisomers represented by the following formulas (3) to (5). They are 1,4:3,6-dianhydro-D-sorbitol (to be referred to as "isosorbide" hereinafter in this text) represented by the following formula (3), 1,4:3,6-dianhydro-D-mannitol (to be referred to as "isomannide" hereinafter in this text) represented by the following formula (4), and 1,4:3,6-dianhydro-L-iditol (to be referred to as "isoidide" hereinafter in this text) represented by the following formula (5).

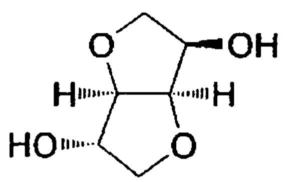

(3)

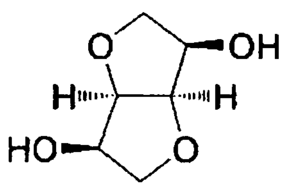

(4)

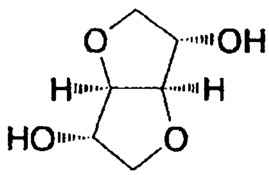

( 5 )

Isosorbide, isomannide and isoidide are obtained from D-glucose, D-mannose and L-idose, respectively. For example, isosorbide can be obtained by hydrogenating D-glucose and dehydrating it with an acid catalyst.

Out of the above ether diols, it has been studied that isosorbide is mainly used as a monomer to be introduced into a polycarbonate.

Patent document 1 discloses a homopolycarbonate resin having a melting point of 203 ˚C which is obtained by a molten ester interchange method. However, this polymer is not satisfactory in terms of mechanical properties.

Non-patent document 1 discloses a homopolycarbonate resin having a glass transition temperature of 166˚C which is obtained by the molten ester interchange method using zinc acetate as a catalyst. However, this polycarbonate resin is not satisfactory in terms of heat stability because it has a thermal decomposition temperature (5 % weight loss temperature) of 283˚C.

Non-patent document 2 discloses a homopolycarbonate resin obtained from isosorbide and bischloroformate by interfacial polymerization. However, this polycarbonate resin is unsatisfactory in terms of heat resistance because it has a glass transition temperature of 144˚C.

Patent document 7 discloses a polycarbonate resin having a glass transition temperature of 170˚C or higher which is manufactured from isosorbide and diaryl carbonate in the presence of a tin catalyst. However, as this polycarbonate resin has a high glass transition temperature, its molding temperature becomes high in order to obtain a molded product from this by injection molding, thereby promoting the thermal decomposition of the polymer. Since this polycarbonate resin has a thermal decomposition temperature (5 % weight loss temperature) of around 300˚C, it has room to improve its heat stability.

To improve the heat resistance and heat stability of a polycarbonate resin, it is conceivable that it is copolymerized with another bishydroxy compound. However, when an aromatic bisphenol derived from petroleum is used, it is against the original purpose that biogenic matter is used (patent document 2, patent document 6 and non-patent documents 3 to 5). There are many aliphatic diols which are derived from petroleum (patent documents 3 to 5), and diols which are biogenic matter are limited to diols having a relatively small number of carbon atoms such as propanediol and butanediol. The boiling points of these aliphatic diols which are biogenic matter are lower than that of isosorbide, and the aliphatic diols are distilled off from a reaction system when polymerization is carried out by the molten ester interchange method. Further, heat stability becomes unsatisfactory.

Consequently, to keep the high proportion of the biogenic matter, a homopolycarbonate resin of isosorbide or copolymerization with another aliphatic diol which is biogenic matter is suitable. However, a polycarbonate resin having a high content of biogenic matter, which is satisfactory in terms of both heat stability and heat resistance, has not been reported yet.

(patent document 1) English Patent Application No. 1079686
(patent document 2) German Patent Application No. 2938464
(patent document 3) JP-A 2003-292603
(patent document 4) WO2004/111106
(patent document 5) JP-A 2006-232897
(patent document 6) JP-A 56-110723
(patent document 7) WO2007/013463
(non-patent document 1) "Journal of Applied Polymer Science", 2002, vol.86, p.872-880
(non-patent document 2) "Macromolecules", 1996, vol.29, p.8077-8082
(non-patent document 3) "Macromolecular Chemistry and Physics", 1997, vol.198, p.2197-2210
(non-patent document 4) "Journal of Polymer Science: Part A", 1997, vol.35, p.1611-1619
(non-patent document 5) "Journal of Polymer Science: Part A", 1999, vol.37, p.1125-1133

Disclosure of the Invention

It is an object of the present invention to provide a polycarbonate resin which has a high content of biogenic matter and is excellent in heat resistance, heat stability and moldability. It is another object of the present invention to provide a process of manufacturing the polycarbonate resin.

The inventors of the present invention have conducted intensive studies to attain the above objects and have found that a polycarbonate resin having excellent heat resistance, heat stability and moldability is obtained by using at least one compound selected from the group consisting of a nitrogen-containing basic compound, alkali metal compound and alkali earth metal compound as a polymerization catalyst and employing specific polymerization conditions. The present invention has been accomplished based on this finding.
That is, the present invention provides the following.

1. A polycarbonate resin containing a recurring unit represented by the following formula (1) as the major constituent, wherein

   (i) the specific viscosity of a solution prepared by dissolving 0.7 g of the resin in 100 ml of methylene chloride at 20°C is 0.20 to 0.45;
   (ii) the glass transition temperature (Tg) of the resin is 150 to 200°C; and
   (iii) the 5 % weight loss temperature (Td) of the resin is 330 to 400°C.

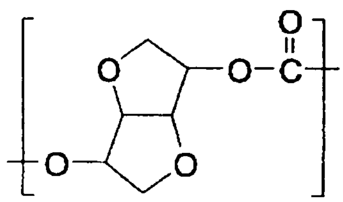

(1)

2. The polycarbonate resin according to the above item 1 which contains the recurring unit represented by the formula (1) in an amount of more than 98 mol% and 100 mol% or less.

3. The polycarbonate resin according to the above item 1, wherein the specific viscosity of a solution prepared by dissolving 0.7 g of the resin in 100 ml of methylene chloride at 20°C is 0.20 to 0.37.

4. The polycarbonate resin according to the above item 1 which has a glass transition temperature (Tg) of 150 to 168°C.

5. The polycarbonate resin according to the above item 1 which has a number average molecular weight of $1.2 \times 10^4$ to $2.0 \times 10^4$.

6. The polycarbonate resin according to the above item 1 which has a biogenic matter content measured in accordance with ASTM D6866 05 of 83 to 100 %.

7. The polycarbonate resin according to the above item 1, wherein the recurring unit represented by the formula (1) is a unit derived from isosorbide.

8. The polycarbonate resin according to the above item 1, wherein the recurring unit represented by the formula (1) is a combination of 75 to 99 mol% of a unit derived from isosorbide and 25 to 1 mol% of a unit derived from isomannide and/or isoidide.

9. A process of manufacturing a polycarbonate resin by reacting a diol component (component A) with a diester carbonate (component B), wherein

   (i) the diol component (component A) contains an ether diol represented by the following formula (2) as the major constituent,

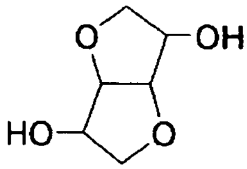

(2)

and the process comprises the steps of:

(ii) thermally reacting these components at normal pressure in the presence of at least one polymerization catalyst selected from the group consisting of a nitrogen-containing basic compound, alkali metal compound and alkali earth metal compound; and

(iii) thermally reacting these components at 180 to 280˚C under reduced pressure.

10. The manufacturing process according to the above item 9, wherein the ratio of the diester carbonate (component B) to the diol (component A) (B/A) is 1.02 to 0.98.

11. The manufacturing process according to the above item 9, wherein the diol component (component A) contains a compound represented by the formula (2) in an amount of more than 98 mol% and 100 mol% or less.

12. The manufacturing process according to the above item 9, wherein the compound represented by the formula (2) is isosorbide.

13. The manufacturing process according to the above item 9, wherein the compound represented by the formula (2) consists of 75 to 99 mol% of isosorbide and 25 to 1 mol% of isomannide and/or isoidide.

14. The manufacturing process according to the above item 9, wherein the diester carbonate (component B) is diphenyl carbonate.

15. The manufacturing process according to the above item 9, wherein the polymerization catalyst is a combination of a nitrogen-containing basic compound and an alkali metal compound.

Best Mode for Carrying Out the Invention

The present invention will be described in detail hereinunder.

[polycarbonate resin]

The polycarbonate resin of the present invention contains a recurring unit represented by the following formula (1) as the major constituent.

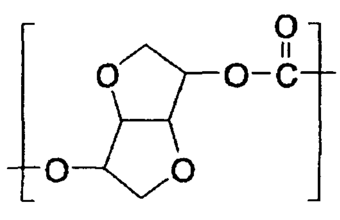

(1)

The content of the recurring unit represented by the formula (1) is preferably more than 98 mol% and 100 mol% or less. The polycarbonate resin is particularly preferably a homopolycarbonate resin having a content of the recurring unit of the formula (1) of 100 mol%. Another unit is a unit derived from an aliphatic diol such as propanediol or butanediol or an aromatic diol such as bisphenol A.

The recurring unit represented by the formula (1) is preferably a unit derived from isosorbide.

The recurring unit represented by the formula (1) may be a combination of a unit derived from isosorbide and a unit derived from isomannide and/or isoidide. In this case, the content of the unit derived from isosorbide in the recurring unit represented by the formula (1) is preferably 75 to 99 mol%, more preferably 80 to 99 mol%, much more preferably 90 to 99 mol%. The content of the unit derived from isomannide and/or isoidide in the recurring unit represented by the

formula (1) is preferably 25 to 1 mol%, more preferably 20 to 1 mol%, much more preferably 10 to 1 mol%. Therefore, it is preferred that the recurring unit represented by the formula (1) should consist of 75 to 99 mol% of the unit derived from isosorbide and 25 to 1 mol% of the unit derived from isomannide and/or isoidide.

When the unit derived from isomannide and/or isoidide is contained in the unit derived from isosorbide, the obtained polycarbonate resin has much higher heat resistance than that of a homopolycarbonate resin having the same specific viscosity as that of the above polycarbonate resin, which is composed of only the unit derived from isosorbide. A polycarbonate resin composed of the unit derived from isosorbide and the unit derived from isomannide is particularly preferred.

A solution prepared by dissolving 0.7 g of the polycarbonate resin of the present invention in 100 ml of methylene chloride has a specific viscosity of 0.20 to 0.45 at 20˚C. The specific viscosity is preferably 0.20 to 0.37, more preferably 0.22 to 0.34. When the specific viscosity is lower than 0.20, it is difficult to provide sufficiently high mechanical strength to the obtained molded product. When the specific viscosity is higher than 0.45, melt flowability becomes too high, whereby the melt temperature required for molding becomes higher than the decomposition temperature disadvantageously.

The glass transition temperature (Tg) of the polycarbonate resin of the present invention is 150 to 200˚C. The glass transition temperature (Tg) is preferably 150˚C or higher and lower than 170˚C, more preferably 150 to 168˚C, much more preferably 160 to 168˚C. When Tg is lower than 150˚C, the obtained polycarbonate resin deteriorates in heat resistance (especially heat resistance by moisture absorption) and when the temperature is higher than 200˚C, the polycarbonate resin deteriorates in melt flowability at the time of molding.

The 5 % weight loss temperature (Td) of the polycarbonate resin of the present invention is 330 to 400˚C. The 5 % weight loss temperature is preferably 340 to 390˚C, more preferably 350 to 380˚C. When the 5 % weight loss temperature falls within the above range, the decomposition of the resin rarely occurs during melt molding advantageously.

Further, the number average molecular weight (Mn) of the polycarbonate resin of the present invention is preferably $1.2 \times 10^4$ to $2.2 \times 10^4$, more preferably $1.2 \times 10^4$ to $2.0 \times 10^4$, much more preferably $1.25 \times 10^4$ to $2.0 \times 10^4$. When the number average molecular weight (Mn) falls within the above range, the polycarbonate resin has excellent mechanical strength and moldability.

The content of biogenic matter measured in accordance with ASTM D6866 05 in the polycarbonate resin of the present invention is preferably 83 to 100 %, more preferably 84 to 100 %.

The melt viscosity measured with a capillary rheometer at 250˚C of the polycarbonate resin of the present invention is preferably $0.4 \times 10^3$ to $2.4 \times 10^3$ Pa·s, more preferably $0.4 \times 10^3$ to $1.8 \times 10^3$ Pa·s at a shear rate of 600 $sec^{-1}$. When the melt viscosity falls within the above range, the polycarbonate resin has excellent mechanical strength and high moldability without the formation of a silver streak during molding.

[process of manufacturing polycarbonate resin]

The polycarbonate resin of the present invention can be obtained by mixing together a diol and a diester carbonate and carrying out melt polymerization while an alcohol or phenol formed by an ester interchange reaction is distilled off at a high temperature under reduced pressure.

That is, the manufacturing process of the present invention is to manufacture a polycarbonate resin by reacting a diol (component A) with a diester carbonate (component B), wherein

(i) the diol component (component A) contains an ether diol represented by the following formula (2) as the major constituent,

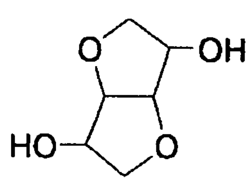

(2)

and the process comprises the steps of:
(ii) thermally reacting these components at normal pressure in the presence of at least one polymerization catalyst selected from the group consisting of a nitrogen-containing basic compound, alkali metal compound and alkali earth metal compound; and
(iii) thermally reacting these components at 180 to 280˚C under reduced pressure.

(diol)

The diol contains an ether diol represented by the following formula (2) as the major constituent.

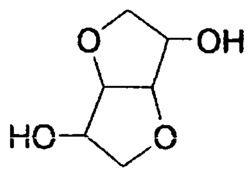

( 2 )

The diol contains a compound represented by the formula (2) in an amount of preferably more than 98 mol% and 100 mol% or less, more preferably 100 mol%.

Examples of the ether diol represented by the formula (2) include isosorbide, isomannide and isoidide represented by the above formulas (3), (4) and (5), respectively. The compound represented by the formula (2) is preferably isosorbide (1,4;3,6-dianhydro-D-sorbitol).

The compound represented by the formula (2) may be a combination of isosorbide and isomannide and/or isoidide. In this case, the content of isosorbide in the compound represented by the formula (2) is preferably 75 to 99 mol%, more preferably 80 to 99 mol%, much more preferably 90 to 99 mol%. The content of isomannide and/or isoidide in the compound represented by the formula (2) is preferably 25 to 1 mol%, more preferably 20 to 1 mol%, much more preferably 10 to 1 mol%. Therefore, the compound represented by the formula (2) consists of 75 to 99 mol% of isosorbide and 25 to 1 mol% of isomannide and/or isoidide.

Ether diols derived from these sugars are also obtained from biomass in the natural world and so-called "regenerable resources". Isosorbide is obtained by hydrogenating D-glucose obtained from starch and dehydrating the hydrogenated D-glucose. Other ether diols are obtained by a similar reaction except starting materials.

(diester carbonate)

The diester carbonate is an ester such as an aryl group or aralkyl group having 6 to 12 carbon atoms whose hydrogen atom may be substituted, or an alkyl group having 1 to 4 carbon atoms. Examples of the diester carbonate include diphenyl carbonate, bis(chlorophenyl)carbonate, m-cresyl carbonate, dinaphthyl carbonate, bis(diphenyl)carbonate, dimethyl carbonate, diethyl carbonate and dibutyl carbonate. Out of these, diphenyl carbonate is preferred from the viewpoints of reactivity and cost.

The molar ratio of the diester carbonate (component B) to the diol (component A) is preferably 1.02 to 0.98, more preferably 1.01 to 0.98, much more preferably 1.01 to 0.99. When the (B/A) molar ratio is higher than 1.02, the ester carbonate residue serves to cap the terminal, whereby a sufficiently high degree of polymerization may not be obtained disadvantageously. When the molar ratio of the diester carbonate is lower than 0.98, a sufficiently high degree of polymerization is not obtained.

(polymerization catalyst)

The polymerization catalyst is at least one selected from the group consisting of a nitrogen-containing basic compound, alkali metal compound and alkali earth metal compound.

Examples of the alkali metal compound include sodium hydroxide, potassium hydroxide, sodium carbonate, potassium carbonate, sodium hydrogencarbonate, and sodium salts and potassium salts of a diphenol. Examples of the alkali earth metal compound include calcium hydroxide, barium hydroxide and magnesium hydroxide. Examples of the nitrogen-containing basic compound include tetramethylammonium hydroxide, tetraethylammonium hydroxide, tetrabutylammonium hydroxide, trimethylamine and triethylamine. They may be used alone or in combination of two or more. A combination of a nitrogen-containing basic compound and an alkali metal compound is particularly preferred.

The amount of the polymerization catalyst is preferably $1 \times 10^{-9}$ to $1 \times 10^{-3}$ equivalent, more preferably $1 \times 10^{-8}$ to $5 \times 10^{-4}$ equivalent based on 1 mol of the diester carbonate (component B). The reaction system is preferably kept in an inert gas atmosphere such as nitrogen for the raw materials, reaction mixture and reaction product. Other inert gases other than nitrogen include argon. Additives such as an antioxidant may be added as required.

The reaction temperature is preferably as low as possible in order to suppress the decomposition of the ether diol and obtain a resin which is rarely colored and has a high viscosity. The polymerization temperature is in the range of preferably 180 to 280˚C, more preferably 180 to 260˚C in order to promote the polymerization reaction properly. The finally reached temperature of the reaction is preferably 235 to 265˚C, more preferably 240 to 260˚C.

A process comprising the steps of heating an ether diol and a diester carbonate at normal pressure to pre-react them in the initial stage of the reaction and gradually reducing the inside pressure of the system to about 1.3 x $10^{-3}$ to 1.3 x $10^{-5}$ MPa to facilitate the distillation-off of the formed alcohol or phenol in the latter stage of the reaction is preferred. The reaction time is generally about 1 to 4 hours.

A catalyst deactivator may be added to the polycarbonate resin. Known catalyst deactivators may be used. Out of these, ammonium salts and phosphonium salts of sulfonic acid are preferred, and ammonium salts and phosphonium salts of dodecylbenzenesulfonic acid such as tetrabutylphosphonium salts of dodecylbenzenelsufonic acid, and ammonium salts and phosphonium salts of paratoluenesulfonic acid such as tetrabutylammonium salts of paratoluenesulfonic acid are more preferred. Methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferred as the ester of sulfonic acid. Out of these, tetrabutylphosphonium salts of dodecylbenzenesulfonic acid are most preferred. The amount of the catalyst deactivator is 0.5 to 50 mols, preferably 0.5 to 10 mols, more preferably 0.8 to 5 mols based on 1 mol of the polymerization catalyst selected from an alkali metal compound and/or an alkali earth metal compound.

Function adding agents such as a heat stabilizer, stabilizing aid, plasticizer, antioxidant, optical stabilizer, nucleating agent, heavy metal inactivating agent, flame retardant, lubricant, antistatic agent and ultraviolet absorber may be added to the polycarbonate resin of the present invention according to application purpose.

The polycarbonate resin of the present invention may be combined with an organic or inorganic filler or fiber to be used as a complex according to application purpose. Examples of the filler include carbon, talc, mica, wollastonite, montmorillonite and hydrotalcite. Examples of the fiber include natural fibers such as kenaf, synthetic fibers, glass fibers, quartz fibers and carbon fibers.

Examples

The following examples are provided for the purpose of further illustrating the present invention but are in no way to be taken as limiting. "Parts" in the examples means parts by weight and "%" means % by weight. Evaluations were made by the following methods.

(1) specific viscosity ($\eta_{sp}$)

A specimen was dissolved in methylene chloride to prepare a solution having a concentration of about 0.7 g/dL, and the specific viscosity of the resulting solution was measured at 20˚C with an Ostwald's viscometer (RIGO AUTO VISCOSIMETER TYPE VMR-0525-PC). The specific viscosity ($\eta_{sp}$) was obtained from the following equation.

$$\eta_{sp} = t/t_0 - 1$$

t: flow time of a specimen solution
$t_0$: flow time of a solvent alone

(2) number average molecular weight (Mn)

50 μl of a solution prepared by dissolving 10 mg of the specimen in 5 ml of chloroform was injected into a GPC measuring device in a clean air atmosphere at a temperature of 23˚C and a relative humidity of 50 % to carry out GPC measurement at a column temperature of 40˚C and a flow rate of 1 ml/min so as to calculate the number average molecular weight of the specimen. Two Resipore (length of 300 mm, inner diameter of 7.5 mm) columns which were manufactured by Polymer Laboratories Co., Ltd. and connected in series, chloroform as a moving phase, the EasiCal PS-2 standard substance manufactured by Polymer Laboratories Co., Ltd., RI as a detector and chloroform as a developing solvent were used. The measuring devices were the L-6000 pump of Hitachi, Ltd., the L-7200 auto sampler of Hitachi, Ltd., the L-7300 column oven of Hitachi, Ltd. and the L-2490 RI detector of Hitachi, Ltd.

(3) melt viscosity

The melt viscosity at 600 $sec^{-1}$ was read from a shear rate/viscosity curve which was obtained by using the capillary rheometer (Capillograph Model 1D) of Toyo Seiki Co. , Ltd. and changing the measurement speed arbitrarily at a capillary length of 10.0 mm, a capillary diameter of 1.0 mm and a measurement temperature of 250˚C.

(4) content of biogenic matter

The content of biogenic matter was measured from a biogenic matter content test based on a radiation carbon concentration (percent modern carbon: C14) in accordance with ASTM D6866 05.

(5) glass transition temperature (Tg)

This was measured with the DSC (Model DSC2910) of TA Instruments Co., Ltd.

(6) 5 % weight loss temperature (Td)

This was measured with the TGA (Model TGA2950) of TA Instruments Co., Ltd.

(7) moldabiilty

The specimen was molded with the JSWJ-75EIII of The Japan Steel Works, Ltd. to evaluate the shape of a sample plate having a thickness of 2 mm visually (mold temperature: 80 to 110˚C, molding temperature: 230 to 260˚C). The criteria are given below.
○: a silver streak formed by turbidity, cracking, surface sink or decomposition is not seen
×: a silver streak formed by turbidity, cracking, surface sink or decomposition is seen

Example 1

1,608 parts by weight (11 mols) of isosorbide and 2, 356 parts by weight (11 mols) of diphenyl carbonate were injected into a reactor, 1.0 part by weight (1 x $10^{-4}$ mol based on 1 mol of diphenyl carbonate) of tetramethylammonium hydroxide and 1.1 x $10^{-3}$ part by weight (0.25 x $10^{-6}$ mol based on 1 mol of diphenyl carbonate) of sodium hydroxide as polymerization catalysts were fed to the reactor, and the reactor was heated at 180˚C under normal pressure in a nitrogen atmosphere to melt all of them.

The inside pressure of the reactor was gradually reduced to 13.3 x $10^{-3}$ MPa under agitation over 30 minutes while the formed phenol was distilled off. After 20 minutes of a reaction in this state, the temperature was raised to 200˚C, the pressure was gradually reduced over 20 minutes, and the reaction was further carried out at 4.00 x $10^{-3}$ MPa for 20 minutes while the phenol was distilled off and continued by raising the temperature to 220˚C for 30 minutes and then to 250˚C for 30 minutes.

The pressure was then gradually reduced to continue the reaction at 2.67 x $10^{-3}$ MPa for 10 minutes and at 1.33 x $10^{-3}$ MPa for 10 minutes and further reduced to 4.00 x $10^{-5}$ MPa, and then the temperature was gradually raised to 260˚C to carry out the reaction at 260˚C and 6.66 x $10^{-5}$ MPa for 1 hour in the end. As a result, a polymer having a specific viscosity of 0.33 was obtained. This polymer had a biogenic matter content of 85 % and excellent heat resistance and heat stability and was satisfactory in terms of moldability as a molding material. The evaluation results are shown in Table 1.

Example 2

1,608 parts by weight (11 mols) of isosorbide and 2, 356 parts by weight (11 mols) of diphenyl carbonate were injected into a reactor and a polymer was obtained by polymerizing them in the same manner as in Example 1 except that 1.0 part by weight (1 x $10^{-4}$ mol based on 1 mol of diphenyl carbonate) of tetramethylammonium hydroxide and 2.9 x $10^{-3}$ part by weight (0.25 x $10^{-6}$ mol based on 1 mol of diphenyl carbonate) of sodium carbonate as polymerization catalysts were used. This polymer had a specific viscosity of 0.23 and excellent heat resistance, heat stability and moldability. The evaluation results are shown in Table 1.

Example 3

1, 608 parts by weight (11 mols) of isosorbide and 2, 356 parts by weight (11 mols) of diphenyl carbonate were injected into a reactor and a polymer was obtained by polymerizing them in the same manner as in Example 1 except that 5. 7 parts by weight (2 x $10^{-4}$ mol based on 1 mol of diphenyl carbonate) of tetrabutylammonium hydroxide and 1.1 x $10^{-3}$ part by weight (0.25 x $10^{-6}$ mol based on 1 mol of diphenyl carbonate) of sodium hydroxide as polymerization catalysts were used. This polymer had a specific viscosity of 0.28 and excellent heat resistance, heat stability and moldability. The evaluation results are shown in Table 1.

Comparative Example 1

1,608 parts by weight (11 mols) of isosorbide and 2,426 parts by weight (11.33 mols) of diphenyl carbonate were injected into a reactor and polymerization was carried out in the same manner as in Example 1 except that 1.0 part by weight ($1 \times 10^{-4}$ mol based on 1 mol of diphenyl carbonate) of tetramethylammonium hydroxide and $1.1 \times 10^{-3}$ part by weight ($0.25 \times 10^{-6}$ mol based on 1 mol of diphenyl carbonate) of sodium hydroxide as polymerization catalysts were used. As a result, although this polymer had a specific viscosity of 0.19 and satisfactory heat resistance and heat stability, cracking occurred during molding. The evaluation results are shown in Table 1.

Comparative Example 2

1,590 parts by weight (10.88 mols) of isosorbide and 39 parts by weight (0.26 mol) of p-tert-butylphenol were fed to a reactor equipped with a thermometer and a stirrer, the inside of the reactor was replaced by nitrogen, and 5,500 parts by weight of well dried pyridine and 32,400 parts by weight of methylene chloride were added to dissolve the above substances. 1,400 parts by weight (14.14 mols) of phosgene was blown into the reactor at 25˚C under agitation over 100 minutes. After the blowing of phosgene, the solution was directly stirred for about 20 minutes to terminate the reaction. After the end of the reaction, the obtained product was diluted with methylene chloride, pyridine was neutralized with hydrochloric acid and removed, the resulting product was rinsed repeatedly until its conductivity became almost the same as that of ion exchange water, and methylene chloride was evaporated to obtain an achromatic powder.

As a result, a polymer having a specific viscosity of 0.48 was obtained. However, as this polymer had too high melt viscosity, a silver streak which seemed to be caused by decomposition was seen during molding, and the polymer was colored badly. The evaluation results are shown in Table 1.

Comparative Example 3

1,206 parts by weight (8.2 mols) of isosorbide, 628 parts by weight (2.8 mols) of bisphenol A and 2,403 parts by weight (11.33 mols) of diphenyl carbonate were injected into a reactor, and a polymer was obtained by polymerizing them in the same manner as in Example 1 except that 1.1 part by weight ($1 \times 10^{-4}$ mol based on 1 mol of diphenyl carbonate) of tetramethylammonium hydroxide and $1.1 \times 10^{-3}$ part by weight ($0.25 \times 10^{-6}$ mol based on 1 mol of diphenyl carbonate) of sodium hydroxide as polymerization catalysts were used. This polymer had a specific viscosity of 0.30 and excellent heat resistance, heat stability and moldability. However, it was unsatisfactory in terms of the content of biogenic matter (63 %). The evaluation results are shown in Table 1.

Comparative Example 4

1,125 parts by weight (7.7 mols) of isosorbide, 251 parts by weight (3.3 mols) of 1, 3-propanediol and 2, 356 parts by weight (11 mols) of diphenyl carbonate were injected into a reactor, and a polymer was obtained by polymerizing them in the same manner as in Example 1 except that 1.0 part by weight ($1 \times 10^{-4}$ mol based on 1 mol of diphenyl carbonate) of tetramethylammonium hydroxide and $1.1 \times 10^{-3}$ part by weight ($0.25 \times 10^{-6}$ mol based on 1 mol of diphenyl carbonate) of sodium hydroxide as polymerization catalysts were used. This polymer had a specific viscosity of 0.31 and high moldability but was slightly inferior in heat stability and not satisfactory in terms of heat resistance and the content of biogenic matter. The evaluation results are shown in Table 1. Propanediol derived from petroleum was used in Comparative Example 4.

Table 1

| | Unit | Ex.1 | Ex.2 | Ex.3 | C.Ex.1 | C.EX.2 | C.Ex.3 | C.Ex.4 |
|---|---|---|---|---|---|---|---|---|
| Isosorbide | Molar ratio | 1 | 1 | 1 | 1 | 1 | 0.75 | 0.70 |
| Bisphenol A | Molar ratio | 0 | 0 | 0 | 0 | 0 | 0.25 | 0 |
| 1,3-propanediol | Molar ratio | 0 | 0 | 0 | 0 | 0 | 0 | 0.30 |
| Diphenyl carbonate | Molar ratio | 1.00 | 1.00 | 1.00 | 1.03 | - | 1.03 | 1.00 |
| Specific viscosity | None | 0.33 | 0.23 | 0.28 | 0.19 | 0.48 | 0.30 | 0.31 |

(continued)

| | Unit | Ex.1 | Ex.2 | Ex.3 | C.Ex.1 | C.EX.2 | C.Ex.3 | C.Ex.4 |
|---|---|---|---|---|---|---|---|---|
| Number average molecular weight | None | 18300 | 12800 | 15600 | 10600 | 26500 | 16700 | 17700 |
| Melt viscosity (250˚C, 600sec$^{-1}$) | $\times 10^{-3}$Pa·s | 1.40 | 0.65 | 1.03 | 0.35 | 2.53 | 1.07 | 0.35 |
| Content of biogenic matter | % | 85 | 84 | 85 | 83 | 85 | 63 | 59 |
| Glass transition temperature | ˚C | 167 | 162 | 166 | 152 | 172 | 160 | 114 |
| 5 % weight loss temperature | ˚C | 357 | 355 | 354 | 354 | 356 | 356 | 332 |
| Moldability | None | ○ | ○ | ○ | × (cracked) | × (silver streak) | ○ | ○ |
| Ex.: Example C.Ex.: Comparative Example | | | | | | | | |

Example 4

789 parts by weight (5.4 mols) of isosorbide, 88 parts by weight (0.6 mol) of isomannide and 1,285 parts by weight (6 mols) of diphenyl carbonate were injected into a reactor, 0.6 part by weight (1 x $10^{-4}$ mol based on 1 mol of diphenyl carbonate) of tetramethylammonium hydroxide and 6.0 x $10^{-4}$ part by weight (0.25 x $10^{-6}$ mol based on 1 mol of diphenyl carbonate) of sodium hydroxide as polymerization catalysts were fed to the reactor, and the reactor was heated at 180 ˚C under normal pressure in a nitrogen atmosphere to melt all of them.

The inside pressure of the reactor was gradually reduced to 13.3 x $10^{-3}$ MPa under agitation over 30 minutes while the formed phenol was distilled off. After 20 minutes of a reaction in this state, the temperature was raised to 200˚C, the pressure was gradually reduced over 20 minutes, and the reaction was further carried out at 4.00 x $10^{-3}$ MPa for 20 minutes while the phenol was distilled off and continued by raising the temperature to 220˚C for 30 minutes and then to 250˚C for 30 minutes.

The pressure was then gradually reduced to continue the reaction at 2.67 x $10^{-3}$ MPa for 10 minutes and at 1.33 x $10^{-3}$ MPa for 10 minutes and further reduced to 4.00 x $10^{-5}$ MPa, and then the temperature was gradually raised to 260 ˚C to carry out the reaction at 250˚C and 6.66 x $10^{-5}$ MPa for 1 hour in the end. A polymer after the reaction was pelletized to obtain a polymer having a specific viscosity of 0.28. The evaluation results of this polymer are shown in Table 2.

Example 5

The procedure of Example 1 was repeated except that 851 parts by weight (5.8 mols) of isosorbide and 26 parts by weight (0.2 mol) of isomannide were used, and the obtained polymer after the reaction was pelletized. The polymer had a specific viscosity of 0.32. Other evaluation results are shown in Table 2.

Table 2

| | Unit | Example 4 | Example 5 |
|---|---|---|---|
| Isosorbide | Molar ratio | 0.9 | 0.97 |
| Isomannide | Molar ratio | 0.1 | 0.03 |
| Diphenyl carbonate | Molar ratio | 1.0 | 1.0 |
| Specific viscosity | None | 0.28 | 0.32 |
| Number average molecular weight | None | 15200 | 17400 |

(continued)

| | Unit | Example 4 | Example 5 |
|---|---|---|---|
| Melt viscosity (250˚C, $600sec^{-1}$) | $\times 10^{-3}$Pa · s | 1.05 | 1.45 |
| Content of biogenic matter | % | 85 | 85 |
| Glass transition temperature | ˚C | 164 | 165 |
| 5 % weight loss temperature | ˚C | 358 | 354 |
| Moldability | None | ○ | ○ |

Effect of the Invention

The polycarbonate resin of the present invention shows a high content of biogenic matter and has excellent heat resistance, heat stability and moldability. The polycarbonate resin of the present invention has excellent heat resistance with a high glass transition temperature. The polycarbonate resin of the present invention has excellent heat stability with a thermal decomposition temperature (5% weight loss temperature) higher than 330˚C.

According to the manufacturing process of the present invention, a polycarbonate resin having a high content of biogenic matter, excellent heat resistance, heat stability and moldability can be obtained.

Industrial Applicability

The polycarbonate resin of the present invention is useful as a molding material. The polycarbonate resin of the present invention may be mixed with a polymer containing biogenic matter such as polylactic acid, aliphatic polyester, aromatic polyester, aromatic polycarbonate, polyamide, polystyrene, polyolefin, polyacryl, ABS or polyurethane, synthetic resin and rubber to be alloyed.

## Claims

1. A polycarbonate resin containing a recurring unit represent by the following formula (1) as the major constituent, wherein

    (i) the specific viscosity of a solution prepared by dissolving 0. 7 g of the resin in 100 ml of methylene chloride at 20˚C is 0.20 to 0.45;
    (ii) the glass transition temperature (Tg) of the resin is 150 to 200˚C; and
    (iii) the 5 % weight loss temperature (Td) of the resin is 330 to 400˚C.

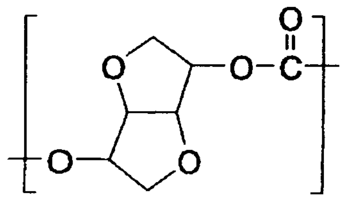

(1)

2. The polycarbonate resin according to claim 1 which contains the recurring unit represented by the formula (1) in an amount of more than 98 mol% and 100 mol% or less.

3. The polycarbonate resin according to claim 1, wherein the specific viscosity of a solution prepared by dissolving 0.7 g of the resin in 100 ml of methylene chloride at 20 ˚C is 0.20 to 0.37.

4. The polycarbonate resin according to claim 1 which has a glass transition temperature (Tg) of 150 to 168˚C.

5. The polycarbonate resin according to claim 1 which has a number average molecular weight (Mn) of 1.2 x $10^4$ to

$2.2 \times 10^4$.

**6.** The polycarbonate resin according to claim 1 which has a biogenic matter content measured in accordance with ASTM D6866 05 of 83 to 100 %.

**7.** The polycarbonate resin according to claim 1, wherein the recurring unit represented by the formula (1) is a unit derived from isosorbide.

**8.** The polycarbonate resin according to claim 1, wherein the recurring unit represented by the formula (1) is a combination of 75 to 99 mol% of a unit derived from isosorbide and 25 to 1 mol% of a unit derived from isomannide and/or isoidide.

**9.** A process of manufacturing a polycarbonate resin by reacting a diol component (component A) with a diester carbonate (component B), wherein

(i) the diol component (component A) contains an ether diol represented by the following formula (2) as the major constituent,

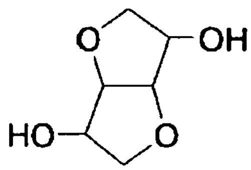

(2)

and the process comprises the steps of:
(ii) thermally reacting these components at normal pressure in the presence of at least one polymerization catalyst selected from the group consisting of a nitrogen-containing basic compound, alkali metal compound and alkali earth metal compound; and
(iii) thermally reacting these components at 180 to 280˚C under reduced pressure.

**10.** The manufacturing process according to claim 9, wherein the ratio of the diester carbonate (component B) to the diol (component A) is 1.02 to 0.98(B/A).

**11.** The manufacturing process according to claim 9, wherein the diol component (component A) contains a compound represented by the formula (2) in an amount of more than 98 mol% and 100 mol% or less.

**12.** The manufacturing process according to claim 9, wherein the compound represented by the formula (2) is isosorbide.

**13.** The manufacturing process according to claim 9, wherein the compound represented by the formula (2) consists of 75 to 99 mol% of isosorbide and 25 to 1 mol% of isomannide and/or isoidide.

**14.** The manufacturing process according to claim 9, wherein the diester carbonate (component B) is diphenyl carbonate.

**15.** The manufacturing process according to claim 9, wherein the polymerization catalyst is a combination of a nitrogen-containing basic compound and an alkali metal compound.

**INTERNATIONAL SEARCH REPORT**

International application No.
PCT/JP2008/051708

A. CLASSIFICATION OF SUBJECT MATTER
*C08G64/02*(2006.01)i

According to International Patent Classification (IPC) or to both national classification and IPC

B. FIELDS SEARCHED

Minimum documentation searched (classification system followed by classification symbols)
C08G64/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
WPIL(QWEB)

C. DOCUMENTS CONSIDERED TO BE RELEVANT

| Category* | Citation of document, with indication, where appropriate, of the relevant passages | Relevant to claim No. |
|---|---|---|
| P,A | WO 2007/063823 A1 (Mitsui Chemicals, Inc.), 07 June, 2007 (07.06.07), Claims (Family: none) | 1-15 |
| P,X | WO 2007/148604 A1 (Mitsubishi Chemical Corp.), 27 December, 2007 (27.12.07), Claims; examples 1 to 25; comparative example 1 (Family: none) | 1-7,9,10,12, 14,15 |
| X | WO 2004/111106 A1 (Teijin Ltd.), 23 December, 2004 (23.12.04), Claims; examples 1 to 23 & EP 1640400 A1 & US 20060149024 A1 & KR 2006019597 A & CN 1805992 A | 9,12,14,15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 April, 2008 (01.04.08) | 08 April, 2008 (08.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/051708

C (Continuation). DOCUMENTS CONSIDERED TO BE RELEVANT

| Category* | Citation of document, with indication, where appropriate, of the relevant passages | Relevant to claim No. |
|---|---|---|
| X | WO 2007/013463 A1 (Ube Industries, Ltd.), 01 February, 2007 (01.02.07), Claims; comparative examples 2 to 4 (Family: none) | 1-7,9-12,14, 15 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 2938464
- JP 2003292603 A
- WO 2004111106 A
- JP 2006232897 A
- JP 56110723 A
- WO 2007013463 A


### Non-patent literature cited in the description


- *Journal of Applied Polymer Science,* 2002, vol. 86, 872-880
- *Macromolecules,* 1996, vol. 29, 8077-8082
- *Macromolecular Chemistry and Physics,* 1997, vol. 198, 2197-2210
- *Journal of Polymer Science: Part A,* 1997, vol. 35, 1611-1619
- *Journal of Polymer Science: Part A,* 1999, vol. 37, 1125-1133